Europäisches Patentamt

European Patent Office

Office européen des brevets

(11) Publication number: **0 452 567 A1**

## EUROPEAN PATENT APPLICATION

(21) Application number: 90200944.8

(22) Date of filing: 17.04.90

(51) Int. Cl.⁵: **C08K 3/04**, C08K 9/00

(43) Date of publication of application:
23.10.91 Bulletin 91/43

(84) Designated Contracting States:
AT BE CH DE DK ES FR GB GR IT LI LU NL SE

(71) Applicant: THE DOW CHEMICAL COMPANY
2030 Dow Center Abbott Road
Midland, MI 48640(US)

(72) Inventor: McCullough, Francis P., Jr.
104 Fir Drive
Lake Jackson, Texas 77566(US)
Inventor: Snelgrove, R. Vernon
Route 1, Box 112
Damon, Texas 77430(US)
Inventor: Hall, David M.
855 Terrace Acres Drive
Auburn, Alabama 36830(US)
Inventor: Ezzell, Bobby R.
1310 Ashly Court
Midland, Michigan 48640(US)
Inventor: Ho, Thoi H.
54 Orchid Court
Lake Jackson, Texas 77566(US)
Inventor: Stobby, William G.
5191 Raccoon Run Road
Johntown, Ohio 43031(US)
Inventor: Suh, Kyung W.
1533 Welsh Hills Road
Granville, Ohio 43023(US)

(74) Representative: Smulders, Theodorus A.H.J.,
Ir. et al
Vereenigde Octrooibureaux Nieuwe Parklaan
107
NL-2587 BP 's-Gravenhage(NL)

(54) Fire resistant nonfibrous and nongraphitic carbonaceous materials.

(57) The invention resides in a nonfibrous composition of matter for improving the fire resistance of flammable polymeric materials comprising a carbonaceous material having an LOI value of greater than 40, a thermal conductivity of less than 1 BTU(ft/hr)(ft²)(°F) [1.72 w/m²(K)], and which produces a char formation greater than 65 percent. Further embodiments include articles comprising a flammable polymeric material and a synergistic amount of the carbonaceous material in intimate contact therewith, and a fire barrier structure comprising a combination of a carbonaceous foam reinforced with carbonaceous fibers. Optionally the embodiments of the invention include an organosilicone polymer in an amount of from 0.5 to 90 percent by weight.

The present invention relates to fire resistant nonfibrous and nongraphitic carbonaceous materials, hereinafter referred to as FR materials, which are capable of synergistically improving the fire resistance of polymeric materials. The FR material, when used in combination with other polymeric materials, provides a synergistic improvement in ignition resistant properties without any substantial alteration of the desirable characteristics of the polymeric materials.

The term "FR materials" as used herein applies to nonfibrous, nongraphitic carbonaceous materials in the form of particles, films, foams, or the like. The term "particles" as used herein includes granules, platelets, powder, and the like.

The invention also relates to composite FR foams, derived from a polymeric precursor material, wherein the FR foam is reinforced with nonflammable, nongraphitic, carbonaceous fibers. Such composite FR foams have a low heat conductivity and excellent thermal insulation properties. In addition, the composite FR foams of the invention can be provided with different electroconductivities with carbonaceous fibers of similar conductivities to that of the foams.

The combustion of most polymeric materials is a succession of physical and chemical processes whereby materials, in reaction with oxygen, release heat and form the less energetic products of water, carbon dioxide and carbon monoxide.

With a given energy supply the rate of temperature increase of the material depends on its specific heat, its density, thermal conductivity, latent heat and its heat of evaporation. This means that, under the same conditions, it is more difficult to bring materials with a high specific heat and/or thermal conductivity to a given temperature than materials of lower specific heat and/or thermal conductivity.

Polystyrene, polyvinyl chloride and polyester have more or less the same thermal conductivity while that of polyethylene and polyamide-6 is approximately twice as high. The thermal conductivity of PYREXTM glass is approximately three times as high as that of polyethylene, whereas copper conducts heat a thousand times better.

The combustion process is initiated by heating the polymeric material up to its decomposition point through heat supplied by radiation, flame or convection. Thereby, besides noncombustible gases such as carbon dioxide and water, combustible gases are formed which are mainly hydrocarbons, hydrogen and carbon monoxide. If an adequate oxygen supply is available, the combustion process is started by pilot, spark, electrical discharge or self-ignition. With sufficient production of heat and heat radiation onto the material, the combustion proceeds automatically. With the rising temperature, the combustion rate increases.

Ignition is the first critical step in a fire situation. Ignition is usually controlled by increasing the rate at which heat is dissipated away from the source of ignition at the polymer surface. Fire growth begins at relatively low temperatures (i.e., 200°C to 400°C). If unsuppressed, temperatures during this stage increase rapidly to a steady state combustion at temperatures of 800°C to 1900°C. Flame retardants are most effective during this stage.

In case of fire, the basic properties of polymeric materials can be classified by flammability and flame propagation which are closely connected. The composition of the polymeric material, its form and density as well as its geometry influence the flammability in particular, whereas the flame propagation is mainly influenced by the amount of oxygen that is available.

Combustion of polymeric materials can be suppressed by: 1) decreasing the amount of fuel to the flame, 2) decreasing the amount of air to the flame, 3) changing the relative values of diffusion and heat of combustion, and 4) increasing the activation energy for overall combustion processes. Flame retardants operate by way of 1 to 3 while water and carbon dioxide operate by way of 2 and 4. Phosphorus flame retardants operate through the formation of a char barrier. Therefore, phosphorous flame retardants work best for polymers that leave a solid char residue in the pyrolysis zone.

Besides the combustibility of polymers, the smoke development and toxicity of combustion gases are very important factors. The problem of smoke reduction has not yet been solved satisfactorily, because the demands on reduced flammability and smoke suppression are principally of an antagonistic nature.

Current methods for providing fire resistance to polymeric materials requires blending with a fire resistant organic material as a major component in a mixture. Fiber blends with high performance fibers such as, for example, KEVLARTM (a trademark of E. I. du Pont de Nemours & Co.) with a limited oxygen index (LOI) of 29 according to test method ASTM D2863-77, polybenzimidazole (LOI 40), PANOXTM A (a trademark of R.K. Textiles Composite Fibers, Ltd.) (LOI 55) are commonly utilized. Examples of these include fire resistant blends of KEVLAR-cotton or KEVLAR-polyester wherein the KEVLAR must be present at levels well above 60 weight percent.

Other methods include adding various chemical additives or coatings such as phosphorous or halogen containing compounds. However, the fire resistant performance is minimal, undependable and subject to neutralization.

U.S. Patent No. 3,573,123, granted March 30, 1971, to R. A. Siegel et al. discloses a high temperature resistant composite material for use in combustion chambers, nozzles, heat shields, and the like. The material has an inner portion that includes carbon fibers for strength and an outer portion having a phenolic or epoxy resin with silica for insulation. The interface between the inner and outer portions is interlocked to resist delamination.

U.S. Patent No. 3,671,487, granted June 20, 1972, to V. Abolines discloses a fire retardant material made from polyesters reinforced with glass.

U.S. Patent No. 3,713,959, granted January 30, 1943, to Rottmayer et al. discloses a material having graphite yarn in an epoxy matrix. The material has a very low coefficient of thermal expansion for use in applications like space vehicles.

U.S. Patent No. 3,811,997, granted May 21, 1974, to E. L. Yaun discloses smoke and flame resistant structural articles for use in aircraft. The articles can be of a laminate or a honeycomb construction. The articles are provided with a thin film of polyimide or polyamide to retard combustion of the underlying laminate and reduce smoke effusion from any burning that does occur.

U.S. Patent No. 4,832,881, granted May 23, 1989, to Arnold, Jr. et al. discloses a low density microcellular carbon foam for use as catalysts, absorbments and electrodes. These foams have a density greater than 1.39 g/cc.

U.S. Patent No. 3,914,494, granted October 21, 1975, to I. K. Park discloses a material for use, for example, as a facing sheet for a sandwich liner for noise suppression in a jet engine. The lightweight material includes woven carbon fibers in a resin matrix. The resin may be a phenolic or a polyimide. A serious drawback for this material is that burning phenolic resins produce a highly irritating smoke.

U.S. Patent No. 4,642,664, granted February 10, 1987, to Goldberg et al. discloses polyaromatic precursor and carbonaceous materials which may be used in the present invention.

U.S. Patent No. 4,255,483, granted March 10, 1981, to N. R. Byrd et al. discloses an acoustic firewall for use in environments such as an aircraft engine nacelle. The firewall includes a graphite fiber or glass cloth embedded in a silica-containing polyimide resin. The presence of the silica is described as being necessary to provide the polyimide resin and the firewall with the desired stability in the presence of a fire and with low thermal conductivity.

With particular reference to the physical and mechanical properties of foams, they are extremely useful for a wide variety of applications, including insulation, upholstery and bedding. However, many foams, for example polyurethane foams, are inherently flammable and lead to melting and the spread of burning polymer particles or droplets. In the case of many "conventional" foams such characteristics lead to a sustained combustion due to progressive smoldering even after the actual flames have extinguished.

It is known that cellular materials manufactured from flammable polymers are more flammable than solid polymeric materials because the insulating effect of the cellular structure allows for a rapid build-up of heat at the heating surface with a consequential high rate of pyrolysis. In solid materials, this heat build-up takes place at a lower rate because of the lower surface area and the higher thermal conductivity of the solid material. Although rigid foams have a thermal conductivity which is similar to flexible foams, the high char formation of the chemical structure of such rigid foams makes them less flammable and also inherently more inclined to form a protective char rather than to form the molten polymer droplets which occur with flexible foams. While both solid and rigid cellular polymeric materials burn less readily than flexible foams and thus are easier to extinguish, they tend to smolder and emit copious quantities of toxic fumes.

Various methods are known to reduce the flammability of polymeric foams. Commonly, additives such as aluminum trihydrate or phosphorus-containing compounds are incorporated into the foam as a flame retardant. Alternatively, halogenated polyols, bromine containing compounds or modacrylics are used in connection with polyurethanes to increase the flame resistance of the foam. None of these additives have proved entirely satisfactory.

It is known that the incorporation of trimerized polyisocyanates (i.e. isocyanurates) into a polyurethane foam improves its burn characteristics. For example, trimerized toluenediisocyanate has been used to prepare flexible foams. Although these foams do exhibit good foam forming characteristics, they also have poor physical properties, particularly poor compression sets and partial cell collapse. In addition, trimerized toluene diisocyanate tends to precipitate from the isocyanate solution in which it is dissolved, causing storage problems and a lack of uniformity in foams prepared therewith.

Polyurethane foams have heretofore been rendered electroconductive by impregnating the foam with an aqueous dispersion of conductive carbon black containing a binder, by impregnating the foam with a styrene butadiene binder containing conductive carbon, by wetting polyurethane foam particles with binders and conductive carbon black and then molding to a desired configuration, or by adding conductive carbon black to the polyurethane prepolymer and then foaming.

Graphitic foams from polyacrylonitrile have been prepared for use as electrodes and in catalytic system. Some of the major problems with these known foams are that they are brittle and have little strength. Attempts to strengthen the foams have been made with resinous materials. However, the resinous materials result in a noncontinuity in conductivity and in a reduction in the physical properties of the foams. Accordingly, there is a need to provide strength to carbonaceous foams without altering the electrical characteristics of the foam.

Additionally, the use of conventional reinforcing fibers for carbonaceous foams usually requires the use of binders or other additives since conventional materials are not compatible with the carbonaceous foams. The use of graphite or fully carbonized fibers requires a wetting agent during preparation. Also, the carbon or graphite fibers have high electrical activity which may not be desirable. It is therefore an object of the invention to use nonlinear, nongraphitic carbonaceous fibers because the elongatability of the fibers facilitates preparation of the foam without breakage of the fibers.

European Publication No. 0199568, published October 29, 1986, to McCullough et al. relates to the preparation of nonlinear carbonaceous fibers which can be used in the present invention.

WIPO Publication No. 88/02695, published April 21, 1988, to McCullough et al. relates to thermal insulating and sound absorbing structures employing nonlinear carbonaceous fibers and to classes of such fibers having different electroconductivity which can be used in the present invention.

Representative of the state of the art relating to foams is U.S. Patent No. 4,832,870, granted May 23, 1989, to Clough et al. which discloses a carbon foam which is filled with a polymeric resin and which contains reinforcing carbon or glass fibers.

U.S. Patent No. 4,698,369, granted October 6, 1987, to Bell discloses flexible, flame retardant polyurethane foams containing up to 30 percent graphite.

U.S. Patent No. 4,489,913, granted December 28, 1984, to Gurgiolo et al. relates to electroconductive foams prepared by dehydro-halogenating a foam containing a halogen containing polymer including chlorinated polyacrylonitrile.

The carbonaceous materials of the invention are characterized by having a char formation of greater than 65 percent and a thermal conductivity of less than 1 BTU(ft/hr)(ft$^2$)($^\circ$F)[1.72 w/m$^2$(K)]. The percent char formation and thermal conductivities of different materials are as follows:

| | % Char | Thermal Conductivity<br>BTU (ft/hr)(ft$^2$)(°F)<br>[w/m$^2$(K)] | |
|---|---|---|---|
| Carbonaceous particles<br>of the invention:<br>(18.6% N$_2$)<br>(16.0% N$_2$) | >65<br>>65 | 0.1<br>0.2 | [0.172]<br>[0.344] |
| KEVLAR™ | 60 | <1.0 | [<1.72] |
| KODEL™ 410 polyester | 10 | <1.0 | [<1.72] |
| Polyacrylonitrile | 60 | <1.0 | [<1.72] |
| Oxidized polyacrylonitrile | 60 | <1.0 | [<1.72] |
| THORNEL® 300* | >95 | 4.84 | [8.33] |
| Cotton | >30 | <1.0 | [<1.72] |
| Rayon | <50 | <1.0 | [<1.72] |
| Polycarbonate | 22 | <1.0 | [<1.72] |
| Polyethylene terephthalate | 10 | <1.0 | [<1.72] |
| Carbon particles | >90 | 2.5 | [4.3] |
| THORNEL® P758** | >95 | 106.48 | [183.1] |

*Trademark of Amoco Corp., Danbury, CT, for graphite yarn
**Trademark of Amoco Corp., Danbury, CT, for graphite yarn derived from pitch.

The measurement of char formation as discussed herein is made using a standard thermogravimetric analysis apparatus adapted so as to perform the analysis in a nitrogen atmosphere. The apparatus is described in Encyclopedia of Polymer Science, Vol. 14, p. 21, John Wiley & Son, 1971

The measurement is performed by loading a sample onto a sample pan of the thermogravimetric analysis apparatus. The sample is then heated in a nitrogen atmosphere at a rate of 10°C/min from ambient temperature to 900°C. The weight is recorded by the thermogravimetric apparatus as a function of remaining sample weight versus temperature. The percent of original weight remaining at 800°C is taken as the char percentage.

It is believed that it is possible to characterize the FR materials of the invention by their coefficient of emissivity. The FR materials which have been tested have been found to possess a coefficient of emissivity of from 0.75 to 1.

In the laws of radiation, the quanta of energy (Q) that is converted in a reaction for a perfect black body is defined by the formula $Q = \sigma T^4$, wherein T is the temperature in degrees Kelvin and $\sigma$ is the Stefan-Boltzmann constant 5.6694 x 10$^{-5}$ erg/cm$^2$/T$^4$/sec (1.01 x 10$^{-8}$ C.H.U./ft$^2$/hr/T$^4$), wherein CHU is Centigrade Heat Unit and T is the temperature of the emitting surface in °K. Q can be determined by conventional methods such as disclosed in Ultra-Violet and Infra-Red Engineering by W. Summer, pages 120 to 134, Sir Isaac Pitman & Sons, Ltd., London, 1962.

However, the emissivity of nonblack bodies, when referring to total radiation is $R = \epsilon \sigma T^4$, where R is the rate of emission or radiation and $\epsilon$ is the emissivity coefficient or radiant efficiency ($\epsilon$ is unity for the black body and less than one for a gray body). It is therefore speculated that a carbonaceous material having a coefficient of emissivity of at least 0.75 and a specific resistivity of greater than 10$^{-1}$ ohm-cm provides a characteristic which contributes to the flame resistance of a material.

It is understood that the term "fire resistant" as used herein relates to any one of the characteristics of flame arresting, flame retarding, fire shielding and fire barrier.

An article, such as textile or cloth, is considered to be flame retarding to the extent that once an igniting flame has ceased to contact unburned parts of the article, the article has the inherent ability to resist further propagation of the flame along its unburned portion, thereby stopping the internal burning process.

Recognized tests to determine whether a textile article is flame retarding, inter alia, are the American Association of Textile Chemists and Colorists Test Method 34-1966 and the National Bureau of Standards Test described in DOC FF 3-71.

An article is considered to be "flame arresting" if it has the ability to block flames from contact with an unburned part of a flammable material for at least five minutes.

An article is considered to be "fire shielding" if it is capable of deflecting flames and the radiation therefrom in a similar manner as aluminum coated protective garments, which are known in the art.

Fire barriers have the capability of being nonflammable, flame retarding and providing thermal insulation characteristics.

The term "polymeric" used herein includes natural substances as well as other organic polymeric materials.

The term "carbonaceous" as used herein relates to polymeric materials, such as carbonaceous fibers, whose carbon content has been irreversibly increased as a result of a chemical reaction such as a heat treatment, for example, as disclosed in European Publication No. 0199568.

The term "nongraphitic" as used herein relates to those carbonaceous materials having an elemental carbon content of less than 92 percent and are substantially free of oriented carbon or graphite microcrystals of the three dimensional order and as defined in U.S. Patent No. 4,005,183, granted January 25, 1977, to Singer.

The term "stabilized" herein applies to polymeric precursor materials, such as carbonaceous fibers, which have been stabilized or oxidized at a specific temperature, typically from $150\degree$ C to $525\degree$ C, preferably less than $250\degree$ C, for example, as described in European Publication No. 0199568. It will be understood that in some instances the precursor materials are oxidized by chemical oxidants at lower temperatures. However, it is important not to overly oxidize the precursor materials since this can result in brittle materials having poor handling capabilities requiring additional support such as by impregnation with other polymeric resins.

Advantageously, a carbonaceous material, such as carbonaceous fibers, are provided on an outer surface of a polymeric article, such as a foamed article, to bind the outer surface of the foamed article and prevent crumbling. The carbonaceous fibers act as a fire barrier for the foamed article.

All percentages hereinafter referred to are in percentage by weight.

More specifically, the present invention relates to a nonfibrous composition of matter for improving the fire resistance of formable polymeric materials, comprising a nongraphitic carbonaceous material derived from a polymeric precursor material, said carbonaceous material having a limited oxygen index (LOI) value of greater than 40, a char formation of greater than 65 percent, and a thermal conductivity of less than 1 BTU(ft/hr)(ft$^2$)($\degree$F)[1.72 w/m$^2$(K)].

The carbonaceous materials of the invention have a LOI value greater than 40 when measured according to test method of ASTM D 2863-77. The test method is also known as "oxygen index" or "limited oxygen index" (LOI). With this procedure the concentration of oxygen in $O_2/N_2$ mixtures is determined at which a vertically mounted specimen is ignited at its upper end and just continues to burn.

The FR materials of the invention are further characterized by a specific electrical resistivity of greater than $10^{-1}$ ohm-cm, preferably, a specific resistivity of from $10^2$ to $10^8$ ohm-cm, and a coefficient of emissivity of from 0.75 to 1.

The FR materials of the invention can be blended with or laminated to various other polymeric materials, such as molded articles, extruded sheets, films, foams or fiber structures including woven, nonwoven or knitted structures to confer a desirable degree of fire resistance to the final mixture, blend or composite. The FR materials of the invention can be blended throughout the other polymeric material and/or cover a surface thereof which, when exposed to fire or flames, provides improved fire resistance to the blend or structure. Depending on how the FR material is used and in the particular form in which it is applied to another polymeric material, the skilled artisan can readily determine the amount of FR material that is necessary to provide a desired degree of improvement in fire resistance.

In accordance with one embodiment of the invention, a polymeric material is provided with improved fire resistance by incorporating throughout the polymeric material, or on at least a surface thereof, a predetermined amount of the FR material of the invention.

For example, polymeric films or sheets are advantageously provided with a surface coating, or are in the form of a laminate with the FR material for improved fire resistance. The FR material can be incorporated within the polymeric material and distributed throughout in amounts of greater than 10 percent by weight, preferably from 20 to 50 percent by weight in order to obtain improved fire resistance. For high performance (fire resistance) as much as 90 percent by weight of carbonaceous material can be used. However, when utilized as a surface coating in order to provide fire barrier properties, it has been found sufficient to use as little as 0.5 percent by weight. That is, when the FR material is used as a barrier between the fuel and the flame, there is a surprising improvement in fire resisting characteristics.

The FR materials which are preferable and which meet the parameters required to provide fire resistance have been found to be heat set carbonaceous materials derived from stabilized acrylic resins. Other precursor polymeric materials such as aramids, polyvinyl halides, polybenzimidazoles, and the like, can also be utilized.

Other polymeric materials which can be provided with improved fire resistant properties with the FR materials of the invention include any of the conventional types of polymeric materials such as thermoplastic or thermosetting resins.

From among the thermoplastic resins, silicone polymers such as polysiloxanes are of particular interest as they have shown a synergistic ignition resistance when employed with the FR materials of the invention. The polysiloxanes are those generally defined by the formula $R_xSi(OR')_{4-x}$ or $R_xSi(OOR')_{4-x}$, wherein R is an organic radical, R' is phenyl or lower alkoxy and x is at least 1 but less than 4.

An amount of from 0.5 to 90 percent by weight of the silicone product in combination with the FR material can be used. Lower amounts of the FR material are utilized when placed on the surface of the silicone product.

Suitable polymeric materials are disclosed in, for example, Modern Plastics Encyclopedia, 1984-85, Vol. 61, No. 10A McGraw-Hill, New York, New York.

Preferably, the FR materials are derived from stabilized acrylic precursor materials and have a percentage nitrogen content of from 5 to 35 percent, more preferably from 16 to 20 percent. The stabilized acrylic precursor materials are selected from acrylonitrile homopolymers, acrylonitrile copolymers and acrylonitrile terpolymers.

The copolymers and terpolymers preferably contain at least about 85 mole percent of acrylic units, preferably acrylonitrile units, and up to 15 mole percent of one or more comonomers such as, for example, methylacrylate, methyl methacrylate, vinyl chloride, vinylidene chloride, vinyl pyridine, and the like, copolymerized therewith.

Nongraphitic, carbonaceous FR fibers are included as a reinforcement material with FR materials, particularly the FR foams, of the present invention. The preparation of such nonlinear FR fibers is particularly described in European Publication No. 0199567.

The FR material of the present invention can be blended with other synthetic or natural fibers. Examples of such other fibers include carbon, cotton, wool, polyester, polyolefin, nylon, rayon, glass, silica, silica alumina, potassium titanate, silicone carbide, silicon nitride, boron nitride, boron, acrylic, tetrafluoroethylene, polyamide, vinyl, protein, ceramic such as aluminum silicate, and oxide fibers such as boron oxide, thoria and zirconia.

Mats, webs or battings of FR fibers can also be provided with particles, such as the alkaline earth or alkaline metal silicates, to further improve their fire resistance performance.

When two battings of FR fibers are provided that are comprised of a different denier fiber for each batting, the battings are readily joined together by a phenomenon similar to the VELCROTM "hook and eye" effect particularly when the fibers have a nonlinear configuration.

Many composites and structures prepared from the combination of the invention are possible. The compositions prepared for a specific application will depend on the mechanical properties desired by the end user. Generally, it has been found that FR material loadings of from 10 and 75 percent by weight are preferable for preparing nonflammable flexible panels, in combination with a polymeric binder and/or an organosilicone polymer.

In accordance with a further aspect of the present invention there is provided a reinforced FR foam which comprises a carbonaceous, irreversibly heat set cellular foam that is reinforced by carbonaceous fibers. The FR foam and fibers form a composite having an LOI value of greater than 40 and a nitrogen content of from 5 to 35 percent, preferably from 16 to 20 percent. The FR fiber content in the FR foam can be from 0.5 to 70 percent by weight. An amount of as little as 0.5 percent of the FR fibers is preferably applied to an outer surface of the foam body.

The foams of the present invention are primarily rigid, open cell, or closed cell. However, by carefully controlled stabilization of the polymeric precursor materials and the carbonization reaction it is possible to obtain a flexible and/or compressible carbonaceous foam. The foams of the invention provide a more effective fire barrier when used in combination with an organosilicone resin.

The foams of the present invention can be obtained by the steps of (a) preparing a polymeric precursor foamed product with a fiber assembly incorporated therein, (b) stabilizing or oxidizing the foamed product, and (c) heat treating the stabilized foam in an inert atmosphere. The heat treatment can be conducted at a predetermined temperature to provide a desired electroconductivity to the foam and the fiber assembly.

EP 0 452 567 A1

The fiber assembly within the foam can be carbonaceous or made carbonaceous during such heat treatment.

The polymeric precursor materials for preparing FR foams of the invention are prepared by conventional means such as extrusion, impregnation, autoclave, solution expansion or a lost foam casting technique.

The blowing agent for preparing the precursor foam materials used in this invention include all those blowing agents which are known in the art and which vaporize or otherwise generate a gas under the conditions encountered in a foaming reaction. Preferred are $CO_2$, $N_2$, water, halogenated hydrocarbons and mixtures thereof.

A sufficient amount of the blowing agent is used to provide a cellular structure to the polymer. Preferably, there is provided a precursor stabilized foam material with a density of not greater than 1.39 $g/cm^3$, preferably a density of from 1.32 to 1.38 $g/cm^3$ as measured on a standard density gradient column as described by David M. Hall in "Practical Fiber Identification," Dept. of Textile Engineering, Auburn University, 2d Ed. 1982, p. 51-54.

A composite of the precursor polymeric foam with the fibers or fiber assembly incorporated therein is first carefully stabilized or oxidized by placing the composite in a preheated furnace at an elevated temperature of from 150°C to 525°C, preferably less than 250°C, in the same manner as described in the procedure for the manufacture of carbonaceous fibers in European Publication No. 0199568.

The stabilized composite is then heat treated in an inert atmosphere at an elevated temperature for a period of time sufficient to produce an irreversible chemical change in the composite with the desired electrical characteristics, but prior to full carbonization or graphitization of the composite.

A first group of such FR materials, including foam/fiber composites, can be classified as being electrically nonconductive and possessing no antistatic characteristics, i.e. they do not have the ability to dissipate an electrostatic charge. These FR materials when prepared from a stabilized polyacrylonitrile precursor material have a carbon content of greater than 65 percent but less than 85 percent.

When the polymeric precursor material is polyacrylonitrile it has been found that a nitrogen content of about 20 percent or more results in an electrically nonconductive FR material. That is, the material has a specific resistivity of greater than $10^3$ ohm-cm.

In a second group, the FR material is classified as having low electrical conductivity and, therefore, static dissipating characteristics. These materials typically have a specific resistance of from 10 to $10^3$ ohm-cm and a carbon content of less than 85 percent. Preferably, the FR material is derived from a stabilized acrylic precursor material and has a percentage nitrogen content of from 16 to 20 percent. Similarly when carbonaceous fibers are used as a reinforcement, the nitrogen content is also from 16 to 20 percent. Structures formed from an FR foam/fiber composite, for example, are lightweight, have low moisture absorbency, and good abrasive strength together with good appearance and handle.

In a third group are FR materials have a carbon content of at least 85 percent. These materials are characterized as being highly electrically conductive. That is, the specific resistance is greater than $10^{-1}$ ohm-cm and the materials are useful in applications where electrical grounding or shielding are also desired. The third group of materials are preferably obtained by heat treating at a temperature above 750°C for a period of time to increase the carbon content but without obtaining full carbonization or graphitization.

It is understood that the time period of heat treatment is also a factor to be considered and is determined by the size of the FR material, e.g. foam billet or article, the specific polymer, etc.

The carbonaceous fibers that are employed in the FR foam also have a carbon content of at least 65 percent and an LOI value of greater than 40 and are prepared according to the procedure disclosed in European Publication No. 0199568. Preferably, the polymeric precursor material is derived from stabilized acrylic based filaments of the same composition as hereinabove described with reference to FR materials generally.

The carbonaceous fibers are in the form of a monofilament fiber or a fiber assembly consisting of a plurality of fibers such as a tow, a batting, matting, webbing, or felting, or a woven fabric or knitted cloth.

In accordance with another embodiment of the invention, there is provided an effective fire barrier which comprises the FR material of the invention in combination with an organosilicone polymer which is characterized by the following recurring units:

(Si-O-Si-O)$_n$

The organosilicone polymer is preferably present on a surface of the structure in an amount sufficient to

8

impart ignition resistance, as defined by 14 CFR 25.853(b), to the structure.

The organosilicone polymers utilized in the invention are the known organosilicone polymers which are prepared from precursor silicone resins by hydrolysis, heat condensation, or free radical condensation reaction. Preferred organosilicone polymers are those which can be prepared by setting or curing a compound selected from the hydrolyzed partial condensation product of $R_xSi(OR')_{4-x}$ and $R_xSi(OOR')_{4-x}$, wherein R is an organic radical and R' is a lower alkyl or phenyl radical, and x is at least 1 but less than 4. Preferably, R is selected from a lower alkyl, alkenyl, substituted alkyl and aryl. The preferred aryl is phenyl. Generally, an amount of from 0.5 to 90 percent by weight, preferably from 1 to 50 percent by weight, of the organosilicone polymer is used, depending on whether it is used on the surface and/or within the structure. More preferably, amounts of the organosilicone polymer of from 2 to 20 percent have resulted in enhancing the ignition resistance, fire resistance and resistance to oxidation of most carbonaceous materials and/or protection of the materials, while maintaining the favorable characteristics of the materials.

The organosilicone polymers can be obtained by thermosetting or curing a silicone resin by means of a catalyst. Other suitable silicone resins are mentioned in the Dow Corning Corp. publication entitled, "Information about High Technology Materials," 1986. Preferred silicone resins are the hydrolyzed partial condensation products of trimethoxymethylsilane, methoxytrimethylsilane, dimethoxy dimethyl silane, and the like.

Exemplary embodiments of the present invention are those set forth in the following examples.

Example 1

Polystyrene having a viscosity of 14 centipoises (measured as a 10 percent solution in toluene) was fed to an extruder at the rate of 541 parts by weight per hour together with a mixture of carbonaceous particles prepared by grinding carbonaceous fibers having a nitrogen content of about 18.1 percent, a specific resistivity of $10^2$ ohm-cm, and a coefficient of emissivity of 0.8 so as to amount to 30 percent of the resulting foam. The foaming agent consisted of a 1:1 by weight mixture of methyl chloride and dichlorodifluoromethane which was injected into the heat plastified polymer prior to its entry to the mixer. A total feed of $20.3 \times 10^{-4}$ moles of blowing agent per gram of polystyrene was employed. Indigo in an amount of 0.06 parts per 100 parts of polystyrene was added as a nucleator. A stable rectangular board was extruded at a temperature of 121.5°C having a cross-sectional dimension of 2.25 x 24 in (5.7 x 61 cm). The carbonaceous particles were distributed fairly uniformly throughout the foam. The resulting foam possessed fire arresting characteristics.

Example 2

Following the procedure set forth in U.S. Reissue Patent No. 27,794, a molten precursor polymer was cast into a film which was then heated in a nitrogen atmosphere at a rate of 5°C/minute to a temperature of 450°C to form a carbonaceous film. The carbonaceous film was then placed in contact with and laminated onto the surface of a polycarbonate sheet.

The carbonaceous film provided the polycarbonate sheet with a fire resistant layer.

Example 3

A series of runs were made to determine the effect various heat treatment temperatures had on the carbonaceous material of the invention. A significant property was the specific resistivity of the material. To determine such property, samples of oxidation stabilized polyacrylonitrile fibers were utilized. The fibers were placed in an oxygen free nitrogen pad in an incremental quartz-tube furnace. The temperature of the furnace was gradually increased from room temperature to about 550°C over a three hour period with the higher temperatures being achieved by 50°C increments every 10 to 15 minutes. The fibers were held at the desired temperature for about 1 hour and the furnace opened and allowed to cool while purging with argon.

The specific resistivity of the fibers was calculated from measurements made on selected samples. The results are set forth in the following table:

| Final Temp. in °C | Log Specific Resistivity Measured in ohm-cm |
|---|---|
| 550 | 5.8 |
| 600 | 3.0 |
| 650 | 0 |
| 750 | 0.3 |
| 850 | -1.0 |

In lieu of fibers, carbonaceous particles, foams or films can be employed with the same effect to measure their specific resistivity.

Example 4

A flexible polyurethane foam was prepared by mixing in a quart (0.95 liter) size container 100 parts by weight (pbw) of a polyether triol having an average molecular weight of about 3000, commercially available from The Dow Chemical Company under the trade name VORANOL™ 3137; 4.3 pbw water; 10 parts of carbonaceous particles derived from stabilized polyacrylonitrile; and 1.2 parts of L-540, a silicone surfactant commercially available from Union Carbide Corp., and 1.2 parts of DABCO™ 33 LV a mixture of 33 percent by weight of triethylenediamine in dipropylene glycol, commercially available from Air Products Co. A separate mixture of 1.715 parts of stannous octoate catalyst and 45.2 ml of an 80/20 mixture of 2,4-/2,6-toluenediisocyanate was stirred with the polyol containing mixture in a one half gallon (1.89 liter) container until the mixture foamed. The carbonaceous particles were distributed throughout the foam. The resultant foam had good flexibility and fire retardant properties.

Example 5

Ion exchange buffer beads containing 70 percent methylmethacylate (MMA), 24 percent styrene and 6 percent divinylbenzene having an average particle size of 500 microns were swelled using 40 PPH dimethylformamide (DMF). A acrylonitrile terpolymer, 85 mol percent acrylonitrile (AN), 13 mol percent (MMA) and 2 mol percent itaconic acid (SAF) was dissolved in DMF to give a 15 percent by weight (%bw) solution of the terpolymer.

Into a 250 ml beaker, 30 g of the SAF solution was mixed with 36 g of the swelled buffer beads and cast into a 3 in (7.6 cm) ID aluminum dish. The mixture was then placed under vacuum for 5 min. to deaereate the sample. The SAF/bead composite was allowed to air dry for 72 hrs. before drying at 80°C overnight. The composite was then placed into a forced air oven heated at 220°C for 30 min. to promote the oxidation and cross-linking reactions of the SAF. The composite was then placed into an oven having an inert atmosphere of nitrogen and heated at 500°C until an 86 percent loss of initial sample weight was achieved. The resulting foam was carbonized and had a density of less than 1.38 g/cc.

Example 6

A heat plastified polyacrylonitrile stream was fed to the extruder at the rate of 541 parts by weight per hour. The blowing agent consisted of a 1:1 by weight mixture of methyl chloride and dichlorodifluoromethane which was injected into the heat plastified polymer prior to its entry to the mixer. The intermeshing studs of the mixer have a relative velocity of 100 ft/min (1829 m/hr). A total feed of $10.3 \times 10^{-4}$ moles of blowing agent per gram of polymer was employed. Indigo in an amount of 0.06 part per 100 parts of polymer was added as a nucleator. A stable rectangular board was extruded at a temperature of 121.5°C having a cross-sectional dimension of 2.25 x 24 in. (5.7 x 61 cm) and an average cell diameter of 0.4 mm. The foam was stabilized by heating in an oven at 175°C for 20 min. and then heat treated in an inert atmosphere at a temperature of from 525°C to 550°C pursuant to the procedure of European Publication No. 0199568 to form a carbonaceous foam.

Example 7

A precursor foam material was prepared according to the autoclave method as follows:

In an autoclave having an inner volume of 5 liters, 2 kg of acrylonitrile resin pellets and 1 kg of trichloromonofluoromethane were heated at 45°C. Foamable resin pellets were obtained containing 0.19 and 0.15 g mol of the foaming agent per 100 g of resin. The pellets were foamed by heating with steam at a pressure of 0.3 kg/cm² gauge to test for maximum expansion ratio. The results were 350-fold and 215-fold (both after 80 seconds of heating with steam). It was found that when the inclusion of the foaming agent in the acrylonitrile resin was effected by the autoclave method instead of the extrusion impregnation method, the pellets were foamed with a substantially uniform distribution at high expansion ratios. The thus obtained foam was stabilized and heat treated according to the process of Example 6 to form a carbonaceous foam.

Example 8

Following the procedure of FAR 25.855 Appendix F entitled, "Test Method to Determine Flame Penetration Resistance of Cargo Compartment Liners," a specimen comprising a pair of panels was prepared (according to Example 1) with a scrim of knit jersey of carbonaceous fibers compressed therebetween. The weight of the panels and scrim was 122 g and the fluff was 40 g. The panels and fluff measured 16 in. x 24 in. x 1/8 in. (41 cm x 61 cm x 3.2 mm).

The scrim was sprayed so as to contain 10 percent by weight, based on the weight of the scrim, of Dow Corning 1-1277 conformal coating. A fluff comprising a mixture of 77 percent carbonaceous fibers and 23 percent polyester was placed as the bottom layer of the panel and was then subjected to a flame with an air velocity (set before ignition) of between 10 to 20 mph (16.1 to 32.2 Km/hr). After 5 min. a thermocouple in contact with the top layer of the panel reached a maximum temperature of 135°F (57.2 °C). Erosion was noted where the flames had impacted against the fluff. However, the panel passed the test.

Example 9

A heat plastified polyacrylonitrile stream containing 10 %bw of nonlinear carbonaceous fibers was fed to the extruder at the rate of 541 parts by weight per hour. The blowing agent consisted of a mixture containing 2.5 pph ethyl chloride/8.0 ·pph HCFC-142B/1.4 pph $CO_2$ was injected into the heat plastified polymer prior to its entry into the mixer. The intermeshing studs of the mixer had a relative velocity of 100 ft/min (30.48 m/min). Phthalocyamine blue in an amount of 0.02 parts per 100 parts of polymer was added as a nucleator. A stable rectangular board having carbonaceous fibers distributed therethrough was extruded at a temperature of 121.5°C having a cross-sectional dimension of 1 in. x 24 in. (2.54 x 61 cm) and an average cell diameter of 0.4 mm. The reinforced foam was stabilized by heating in an oven at 175°C for 20 min. and then heat treated in an inert atmosphere at a temperature of from 525°C to 550°C to form a carbonaceous fiber reinforced carbonaceous foam.

Example 10

Precursor reinforced foam material was prepared according to the autoclave method as follows:

In an autoclave having a volume of 5 liters, 2 kg of acrylonitrile resin pellets containing nonlinear PANOXTM fibers (oxidized polyacrylonitrile fibers obtained from R.K. Carbon Fibers, Inc.) and 1 kg of trichloromonofluoromethane were heated at 45°C. Consequently, there were obtained foamable resin pellets containing 0.19 and 0.15 g mol/(100 g of resin) of the foaming agent. The pellets were foamed by heating with steam at a pressure of 0.3 kg/cm² gauge to test for maximum expansion ratio. The results were an expansion of 350-fold and 215-fold (both after 80 seconds heating with steam). It was found that when the inclusion of the foaming agent in the acrylonitrile resin was effected by the autoclave method instead of the extrusion impregnation method, the pellets were foamed with a substantially uniform distribution of fibers at as high expansion ratios. The thus obtained foam was stabilized and heat treated according to the process of Example 1 to form a carbonaceous fiber reinforced carbonaceous foam.

Example 11 - Nonflammability Test

The nonflammability of the reinforced carbonaceous foam of the preceding Examples 9 and 10 was determined following the test procedure set forth in 14 FAR 25.853(b). The test was performed as follows:

A minimum of three 1 in. x 6 in. x 6 in. (2.54 cm x 15.24 cm x 15.24 cm) specimens were heat treated at 550°C and conditioned by maintaining the specimens in a conditioning room maintained at 70°F ±5°F and 50 percent ±5 percent relative humidity for 24 hours preceding the test.

Each specimen was supported vertically and exposed to a Bunsen or Turill burner with a nominal I.D. tube adjusted to give a flame of 1.5 in. (3.81 cm) in height by a calibrated thermocouple pyrometer. The center of the flame was 1550°F. The lower edge of the specimen was 3/4 in. (1.91 cm) above the top edge of the burner. The flame was applied to the center line of the lower edge of the specimens for 12 seconds and then removed.

Pursuant to the test, the material was self-extinguishing. The average burn length did not exceed 8 in. (20.32 cm). The average after flame did not exceed 15 seconds and no flame drippings were observed.

Example 12

Special acrylic fibers (SAF) manufactured by Courtaulds (U.K.) were dissolved in 10 to 15 percent sodium thiocyanate solution in an amount of 15 %bw. The resulting mixture was placed in a beaker and sufficient polymethylmethacrylate beads were added so that the final volume occupied by the beads of the resulting mixture was approximately 65 %bw beads and 35 %bw solution containing the solvated acrylic fibers. The resulting mixture was stirred and 20 %bw carbonaceous fibers added thereto, and poured into a small mold. The water from the resulting mixture was allowed to evaporate in an oven at 60°C until a solid material was formed in the mold. This material was then carefully extracted with distilled deionized water to remove most of the sodium thiocyanate which had incorporated into the solid. The extracted solid was then allowed to dry at about 60°C in an oven and then allowed to rise at a temperature of 225°C for a period of 30 min. or longer in order to stabilize the acrylic polymer by oxidation and to drive off the beads in the form of methylmethacrylate to produce an open cell structure. Most of the beads were driven off in a period of from 30 min. to 8 hrs. at a temperature of from 225°C to 280°C. The carbonaceous fiber containing porous foam material in its stabilized form was placed in a nitrogen purged oven and slowly heated up to a final temperature of 550°C. The resulting carbonaceous foam had a density of from 1 to 1.5 lb/ft$^3$ and a noticeable compressive resiliency.

Example 13

Following the procedure as outlined in Example 12, the SAF fibers were dissolved in DMF solvent in place of the aqueous sodium thiocyanate solvent. The same amount of polymethylmethacylate beads were added to the resulting mixture and the mixture containing the additional beads and carbonaceous fibers were placed in a mold and the solvent allowed to evaporate. The distilled water extraction step was omitted and the oxidation stabilization and heat treatment was performed in a manner similar to that described in Example 12. The resulting carbonaceous fiber reinforced carbonaceous foam had a homogeneous appearance and was noticeably more resilient and less brittle. The resulting foam was electrical conductive and had a slightly lower density than that measured for Example 12.

Example 14

Following the procedure of Example 13, a foam was prepared except that expanded polymethylmethacrylate beads with carbonaceous fibers were substituted for standard polymethylmethacrylate beads giving a resulting carbonaceous foam with a density of less than 1 lb/ft$^3$ (16 Kg/m$^3$).

Example 15

Following the procedure of Example 13, a carbonaceous fiber reinforced carbonaceous foam was prepared except that expanded polymethylmethacrylate beads and nonlinear PANOX™ fibers were utilized. The resulting foam had a density of less than 1 lb/ft$^3$ (16 Kg/m$^3$).

Example 16

Acrylic fibers were dissolved in a 90/10 solvent blend of dimethylformamide and 2-pyrrolidinone at a 15 %bw level. A decomposable blowing agent, azodicarbonamide at 15 pph was suspended in the solution and then casted into a polyethylene tray containing a mat of carbonaceous fibers. The solvent was allowed to evaporate off and the resulting product was vacuum dried at 50°C for 18 hrs. The dried product was pliable and, when heated in a vented oven at 280°C, produced a cellular structured foam having a reinforcing layer of carbonaceous fibers. The cellular structure was then heat treated according to the procedure disclosed in European Publication No. 0199568 to form a carbonaceous foam.

Having described the invention in detail and by reference to the preferred embodiments thereof, it will be apparent that modifications and variations, such as may be readily apparent to persons skilled in the art, are intended to be included within the scope of the invention as herein defined in the appended claims.

## Claims

1. A nonfibrous composition of matter for improving the fire resistance of flammable polymeric materials comprising a nongraphitic carbonaceous material derived from a polymeric precursor material, said carbonaceous material having an LOI value of greater than 40, a char formation of greater than 65 percent, and a thermal conductivity of less than 1 BTU(ft/hr)(ft$^2$)($^\circ$F)[1.72 w/m$^2$(K)].

2. The composition of Claim 1, wherein said carbonaceous material has a specific resistivity of greater than $10^{-1}$ ohm-cm.

3. The composition of Claim 2, wherein said carbonaceous material has a specific resistivity of from $10^2$ to $10^8$ ohm-cm.

4. The composition of Claim 1, 2 or 3, wherein said carbonaceous material has a coefficient of emissivity of from 0.75 to 1.

5. The composition of any one of the preceding claims, wherein the carbonaceous material is derived from a stabilized polymeric precursor material selected from aromatic polyamide, polyacrylonitrile, polybenzimide, polyvinyl chloride and polyvinylidene chloride.

6. The composition of any one of Claims 1 to 4, wherein said carbonaceous material is derived from an oxidation stabilized polymeric precursor material selected from homopolymers, copolymers and terpolymers of acrylonitrile.

7. The composition of Claim 6, wherein said carbonaceous material has a nitrogen content of from 5 to 35 percent.

8. An article comprising a polymeric material and a synergistic amount of the nonfibrous, nongraphitic carbonaceous material of any one of the preceding claims, said carbonaceous material being in intimate contact with said carbonaceous material.

9. The article of Claim 8, wherein said carbonaceous material comprises from 0.5 to 90 percent by weight.

10. The article of Claim 9, wherein said carbonaceous material is located on at least one surface of the article in an amount greater than 0.5 percent by weight of the article.

11. The article of Claims 8, 9 or 10, wherein said carbonaceous material is selected from particles, films, sheets or foam.

12. The article of Claim 11, wherein said carbonaceous material is a foam having a density of less than 1.38 g/cc.

13. The article of any one of Claims 8 to 12, wherein said polymeric material comprises an organosilicone polymer having (Si-O-Si-O)$_n$ recurring units, said polymer being present in an amount of from 0.5 to 90 percent by weight.

14. A nonflammable fiber reinforced foam structure, comprising a nongraphitic carbonaceous foam having an LOI value of greater than 40, a char formation of greater than about 65 percent, and a thermal conductivity of less than 1 BTU(ft/hr)(ft$^2$)($^\circ$F)[1.72 w/m$^2$(K)], said foam having from 0.5 to 70 percent by weight of a nongraphitic carbonaceous fiber structure incorporated therein.

15. The foam structure of Claim 14, wherein said carbonaceous fiber structure is selected from linear or nonlinear monofilament fibers, a multifilament fiber tow, a multiplicity of fibers forming a wool-like fluff, a nonwoven batting, matting, webbing, or felting, or a woven fabric or knitted cloth.

16. The foam structure of Claim 14 or 15, wherein said carbonaceous fibers are nonlinear, resilient, shape reforming and elongatable, have a sinusoidal and/or coil-like configuration, and a reversible deflection ratio of greater than 1.2:1.

17. The foam structure of Claim 14, 15 or 16, wherein the carbonaceous foam and fiber structures are derived from a stabilized polymeric precursor material selected from aromatic polyamide, polyacrylonitrile, polybenzimide, polyvinyl chloride and polyvinylidene chloride.

18. The foam structure of Claim 17, wherein said carbonaceous foam and fiber structures are derived from an acrylic precursor material selected from acrylonitrile homopolymers, acrylonitrile copolymers and acrylonitrile terpolymers.

19. The foam structure of Claim 17, wherein said carbonaceous foam and fiber structures are derived from a stabilized polyacrylonitrile polymer having a percent nitrogen content of from 5 to 35 percent.

European
Patent Office

**EUROPEAN SEARCH
REPORT**

Application Number

**EP 90 20 0944**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 327 170  (THE DOW CHEMICAL COMPANY) <br> * page 2, line 43 - page 3, line 47; claims 1-14 * <br> – – – | 1-19 | C 08 K 3/04 <br> C 08 K 9/00 |
| A,D | WO-A-8 802 695  (THE DOW CHEMICAL COMPANY) <br> * page 11, line 28 - page 13, line 5; claims 1-16 * <br> – – – – – | 1-3,5-7 | |

|  |
|---|
| TECHNICAL FIELDS SEARCHED (Int. Cl.5) |
| C 08 K <br> C 08 L <br> C 08 J |

The present search report has been drawn up for all claims

| Place of search | Date of completion of search | Examiner |
|---|---|---|
| The Hague | 08 November 90 | WILSON A.J.D. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons
....................................................................................
& : member of the same patent family, corresponding
    document